## Europäisches Patentamt
## European Patent Office
## Office européen des brevets

(11) Veröffentlichungsnummer : **0 433 600 B1**

# (12) EUROPÄISCHE PATENTSCHRIFT

(45) Veröffentlichungstag der Patentschrift :
05.01.94 Patentblatt 94/01

(51) Int. Cl.$^5$ : **C01B 33/107**, A62D 3/00

(21) Anmeldenummer : **90120037.8**

(22) Anmeldetag : **19.10.90**

(54) **Verfahren zur abwasserfreien Aufarbeitung von Rückständen einer Chlorsilandestillation mit Calcium-Basen oder Calciumcarbonat.**

(30) Priorität : **19.12.89 DE 3941825**
**19.12.89 DE 3941827**

(43) Veröffentlichungstag der Anmeldung :
**26.06.91 Patentblatt 91/26**

(45) Bekanntmachung des Hinweises auf die
Patenterteilung :
**05.01.94 Patentblatt 94/01**

(84) Benannte Vertragsstaaten :
**BE DE FR GB IT NL**

(56) Entgegenhaltungen :
**US-A- 4 690 810**

(73) Patentinhaber : **HÜLS AKTIENGESELLSCHAFT**
**D-45764 Marl (DE)**

(72) Erfinder : **Ruff, Klaus**
**Im Grund 7b**
**W-5210 Troisdorf (DE)**

## Beschreibung

Gegenstand der vorliegenden Erfindung ist ein Verfahren zur abwasserfreien Aufarbeitung von Rückständen, die bei der Destillation von Chlorsilanen anfallen, wenn diese durch Umsetzung von Rohsilicium mit Chlor oder Chlorwasserstoff hergestellt werden. Die Hauptmengen so hergestellter Chlorsilane sind Trichlorsilan und Siliciumtetrachlorid.

Die Rückstände werden in wäßriger Phase mit Calcium-Basen oder Calciumcarbonat umgesetzt. Nach dieser Behandlung sind die Rückstände chemisch inert und können umweltschonend deponiert werden.

Bei der industriellen Herstellung von Chlorsilanen aus Silicium werden meistens Rohsiliciumsorten eingesetzt, deren Siliciumgehalt 85 Gew.-% und mehr beträgt. Weitere Bestandteile des Rohsiliciums sind hauptsächlich Eisen, Aluminium, Calcium und Titan, die bei der Umsetzung mit Chlor oder Chlorwasserstoff in ihre Chloride überführt werden. Außer diesen Metallchloriden fallen noch Hochsieder wie Hexachlordisiloxan und Pentachlordisiloxan an.

Üblicherweise werden die Rückstände destillativ von den Chlorsilanen grob abgetrennt. Je nach Destillationsbedingungen liegt der Rückstand als Suspension oder Feststoff vor, der einer gesonderten Aufarbeitung bedarf.

Sinnvollerweise wird die Destillation der Chlorsilane möglichst vollständig durchgeführt, da im Rückstand verbleibende Chlorsilane nicht mehr in Nutzprodukte umgesetzt werden und somit einen Wertverlust bedeuten. Für den Fall, daß sämtliche Rückstände als Suspension entsorgt werden, hat diese Suspension eine typische Zusammensetzung von etwa 30 bis 40 Gew.-% Aluminiumchlorid, 2 bis 3 Gew.-% Eisenchlorid, 2 bis 3 Gew.-% Titantetrachlorid, 35 bis 45 Gew.-% Hexa- und Pentachlordisiloxan, der Rest sind Siliciumtetrachlorid und etwa 1 Gew.-% Trichlorsilan.

Aus der DE-PS 21 61 641 ist bekannt, den Rückstand mit Wasserdampf unter Bildung von Chlorwasserstoff umzusetzen. Eine ausreichende Umsetzung erfolgt jedoch nur bei sehr hohen Wasserdampfüberschüssen, so daß eine sehr verdünnte Salzsäure anfällt, die entsorgt werden muß.

Zur Vermeidung des Entstehens von verdünnter Salzsäure wurde in der DE-PS 36 42 285 vorgeschlagen, die Hydrolyse des Rückstands in Gegenwart von zusätzlichem Chlorwasserstoff vorzunehmen und das nicht umgesetzte Wasser zu rezirkulieren. Gemäß DE-OS 37 42 614 läßt sich durch zusätzliche Behandlung mit Luft der Restchloridgehalt im Hydrolyserückstand weiter senken.

Alle diese Verfahren sind aufwendig und verursachen zum Teil Abwasser- und Abluftprobleme.

In der US-Patentschrift 4 690 810 wird ein Verfahren zur Umsetzung von Chlorsilanen mit Kalkmilch beschrieben, wobei die Chlorsilane bis zu 20 Gew.-% fein verteilte Metalle und zwischen 0,1 und 5 Gew.-% Metallchloride von Aluminium, Eisen und Titan enthalten. Der Chlorsilanstrom wird über ein Tauchrohr in eine Kalkmilch-Suspension mit einem pH-Wert von mindestens 9 eingeleitet, bis sich ein pH-Wert von 7 bis 8 einstellt. Im Beispiel dieser Patentschrift enthält der eingesetzte Chlorsilanstrom 14 Gew.-% Trichlorsilan, 76 Gew.-% Siliciumtetrachlorid, 0,16 Gew.-% sonstige Metallchloride und 10 Gew.-% elementares festes Silicium. 1 665 kg dieses Chlorsilanstromes wurden mit 5 678 Liter einer Kalkmilch-Suspension mit 15 Gew.-% CaO zur Reaktion gebracht.

Wenn man von einer Brutto-Umsetzung ausgeht gemäß

$$2 \text{ SiHCl}_3 + 3 \text{ CaO} + H_2O \rightarrow 2 \text{ SiO}_2 + 3 \text{ CaCl}_2 + 2H_2 \quad (1)$$

$$\text{SiCl}_4 + 2 \text{ CaO} \rightarrow \text{SiO}_2 + 2 \text{ CaCl}_2 \quad (2)$$

$$2 \text{ AlCl}_3 + 3 \text{ CaO} \rightarrow \text{Al}_2O_3 + 3 \text{ CaCl}_2 \quad (3),$$

so folgt aus diesem Beispiel, daß CaO in einer Menge von 97 %, bezogen auf vorstehende stöchiometrische Gleichungen, benötigt wurde, um die Reaktion durchzuführen. Der Umsatz an CaO ist vollständig; es entsteht ein leicht filtrierbarer Feststoff, das klare Filtrat muß entsorgt werden.

Diese Literaturstelle gibt keine Anleitung zum technischen Handeln bezüglich der Aufarbeitung von Rückständen einer Chlorsilandestillation, da praktisch reine Chlorsilane umgesetzt werden, bei denen der Gehalt an Aluminiumchlorid verschwindend gering ist und keine Chlorsiloxane zugegen sind. Außerdem wird kein Weg zur Filtratentsorgung aufgezeigt. Bringt man einen typischen Destillationsrückstand aus der Destillation von Chlorsilanen, welche durch Umsetzung von Rohsilicium mit Chlor oder Chlorwasserstoff hergestellt wurden, mit Kalkmilch gemäß den Vorschriften des genannten US-Patents in etwa stöchiometrisch zum Umsatz, entstehen ein kaum filtrierbarer schleimiger Rückstand und ein trübes Filtrat.

Es bestand daher die Aufgabe, ein wirtschaftliches Entsorgungsverfahren für Destillationsrückstände von Chlorsilanproduktionen zu entwickeln, das abwasserfrei arbeitet und einen unbedenklich zu deponierenden festen Rückstand liefert.

Als Lösung dieser Aufgabe wurde ein Verfahren zur abwasserfreien Aufarbeitung von Rückständen einer Chlorsilandestillation durch Reaktion in wäßriger Phase mit Calcium-Basen oder Calciumcarbonat entwickelt, welches dadurch gekennzeichnet ist, daß man

a) bei der Reaktion einen Überschuß an Calcium-Basen oder Calciumcarbonat von mindestens 15 %, bezogen auf die zur Überführung der eingebrachten Chloridanteile in Calciumchlorid erforderliche stöchiometrische Mindestmenge, einsetzt,

b) den durch Reaktion entstandenen Feststoff aus der Reaktionsmischung abtrennt und die restliche Reaktionsmischung in den Prozeß zurückführt.

Als Calcium-Basen im Sinne dieser Erfindung werden CaO und Ca(OH)$_2$ bezeichnet. Mit der stöchiometrischen Mindestmenge an Calcium-Basen wird diejenige Menge bezeichnet, die zur Umwandlung der eingebrachten Chloridanteile in Calciumchlorid benötigt wird. Für Trichlorsilan, Siliciumtetrachlorid und Aluminiumchlorid sind die Reaktionsgleichungen mit CaO im vorstehenden Text als Gleichung (1), (2) und (3) angegeben.

Die entsprechenden Reaktionsgleichungen für Penta- und Hexachlordisiloxan lauten:

$$2 \, Si_2OCHI_5 + 5 \, CaO + H_2O \rightarrow 4 \, SiO_2 + 5 \, CaCl_2 + 2H_2 \quad (4)$$

$$Si_2OCl_6 + 3 \, CaO \rightarrow 2 \, SiO_2 + 3 \, CaCl_2 \quad (5).$$

Es wurde gefunden, daß ein Überschuß an Calcium-Basen oder Calciumcarbonat, bezogen auf die stöchiometrische Mindestmenge, die Filtrierbarkeit der in der Reaktionsmischung befindlichen Feststoffe günstig beeinflußt bzw. überhaupt erst ermöglicht. Obwohl mit steigendem Überschuß an Calcium-Basen oder Calciumcarbonat der abzufiltrierende Feststoff zunimmt, ergeben sich für eine festgelegte zu entsorgende Rückstandsmenge zunächst immer geringer werdende benötigte Filterflächen, die mit wachsendem Überschuß nach Durchlaufen eines Minimums wieder ansteigen. So wurde z. B. bei Umsetzung von Rückstand mit Calciumhydroxid eine minimale Filterfläche bei 100 % Überschuß an Calciumhydroxid gefunden. Geringere oder höhere Überschüsse erfordern größere Filterflächen. Unter wirtschaftlichen Gesichtspunkten, wobei einerseits die zu installierende Filterfläche, andererseits die Kosten für die eingesetzten Calcium-Basen zu berücksichtigen sind, werden Überschüsse von 20 bis 100 %, insbesondere von 30 bis 60 %, bevorzugt.

Mit der stöchiometrischen Mindestmenge an Calciumcarbonat wird diejenige Menge bezeichnet, die zur Umwandlung der eingebrachten Chloridanteile in Calciumchlorid gemäß den folgenden Reaktionsgleichungen benötigt wird:

$$2 \, SiHCl_3 + 3 \, CaCO_3 + H_2O \rightarrow 2 \, SiO_2 + 3 \, CaCl_2 + 3 \, CO_2 + 2 \, H_2 \quad (6)$$

$$SiCl_4 + 2 \, CaCO_3 \rightarrow SiO_2 + 2 \, CaCl_2 + 2 \, CO_2 \quad (7)$$

$$2 \, Si_2OHCl_5 + 5 \, CaCO_3 + H_2O \rightarrow 4 \, SiO_2 + 5 \, CaCl_2 + 5 \, CO_2 + 2 \, H_2 \quad (8)$$

$$Si_2OCl_6 + 3 \, CaCO_3 \rightarrow 2 \, SiO_2 + 3 \, CaCl_2 + 3 \, CO_2 \quad (9)$$

$$3 \, AlCl_3 + 3 \, CaCO_3 \rightarrow Al_2O_3 + 3 \, CaCl_2 + 3 \, CO_2 \quad (10).$$

Dabei hängt die Filtrierbarkeit in starkem Maße von der Feststoffkonzentration der Reaktionsmischung ab. Für eine Feststoffkonzentration von 70 g/l wurde eine minimal erforderliche Filterfläche bei einem Überschuß an Calciumcarbonat von 90 % gefunden, bei einer Feststoffkonzentration von 160 g/l liegt das Minimum der Filterfläche bei 50% Überschuß.

Geringere oder höhere Überschüsse erfordern jeweils größere Filterflächen. Geringere Feststoffkonzentrationen ermöglichen geringere Filterflächen; so liegt z. B. die minimal erforderliche Filterfläche bei 70 g/l Feststoffkonzentration um 40 % niedriger als die minimal erforderliche Filterfläche bei 160 g/l Feststoffkonzentration.

Unter wirtschaftlichen Gesichtspunkten, wobei einerseits die zu installierende Filterfläche, andererseits die Kosten für das eingesetzte Calciumcarbonat zu berücksichtigen sind, werden Überschüsse von 20 bis 100 % insbesondere von 30 bis 60 %, bevorzugt. Die Feststoffkonzentration der Reaktionsmischung liegt vorteilhafterweise bei 70 bis 100 g/l.

Bei niedrigen Überschüssen ist das Filtrat einer Reaktionsmischung aus Destillationsrückstand und wäßrigen Calcium-Basen oder Calciumcarbonat trübe, erst ab Überschüssen von 15 % an wird das Filtrat visuell klar. Bei längeren Standzeiten bei Raumtemperatur kann jedoch ein flockiger Niederschlag ausfallen. Es ist wesentlich für das erfindungsgemäße Verfahren, die nach Abtrennung der Feststoffe verbleibende restliche Reaktionsmischung wieder in den Aufarbeitungsprozeß zurückzuführen. Auf diese Weise wird nur der feste Reaktionsrückstand aus dem Aufarbeitungsprozeß ausgeschleust, das Aufarbeitungsverfahren arbeitet somit abwasserfrei. Extrahiert man den aus einer Reaktionsmischung abgetrennten Feststoff, der gemäß dem erfindungsgemäßen Verfahren gewonnen wurde, nach Standardmethoden und untersucht den Extrakt auf umweltrelevante Metallspuren, so werden die zulässigen Grenzwerte weit unterschritten.

Die Umsetzung des Destillationsrückstandes mit Calcium-Basen oder Calciumcarbonat in wäßriger Phase kann in jedem geeigneten Reaktor erfolgen. Zweckmäßigerweise bestehen die dem Prozeßmedium ausgesetzten Teile aus säureresistentem Werkstoff. Für eine diskontinuierliche Verfahrensweise sind Rührkessel geeignet. Da bei Einleiten des Destillationsrückstandes in die wäßrige Phase infolge heftiger Reaktion - bei Einsatz von Calciumcarbonat auch infolge der CO$_2$-Entwicklung - chloridhaltige Verbindungen dampfförmig entweichen können, wird zweckmäßigerweise der vorgelegte Rührkesselinhalt über einen Sprühturm umgepumpt und so das Entweichen von chloridhaltigen Verbindungen vermieden. Zum Abführen der Reaktionswärme kann ein externer Wärmetauscher in diesen Umwälzkreislauf eingebaut werden, wenn eine Mantelkühlung des Rührbehälters nicht ausreicht.

Es ist ebenfalls möglich, die Umsetzung des Destillationsrückstandes in zwei aufeinanderfolgenden Schnitten vorzunehmen: im ersten Schritt wird eine Hydrolyse des Destillationsrückstandes durchgeführt, im zweiten Schritt erfolgt dann die Zugabe der Calcium-Basen oder des Calciumcarbonats. Durch diese Maßnahme wird kein anderes Ergebnis erreicht.

Die Abtrennung des Feststoffes aus der Reaktionslösung kann mit allen gängigen Verfahren durchgeführt werden. Zweckmäßig ist eine Abtrennung mit Filtern oder Zentrifugen. Der abgetrennte Feststoff enthält dann noch anhaftende Reaktionslösung. Es kann wirtschaftlich sein, diese Restfeuchte durch Trocknen ganz oder teilweise zu reduzieren, wobei einerseits die Deponiekosten für den feuchten Filterkuchen, andererseits der Aufwand für Trockner und Heizmedium zu berücksichtigen sind. Die beim Trocknungsvorgang entzogene Feuchtigkeit wird mit Vorteil kondensiert und in den Prozeß zurückgeführt. Die Bauart der Trockner ist nicht festgelegt: fällt der zu trocknende Feststoff kontinuierlich an, kann man Schneckentrockner oder Schaufeltrockner einsetzen.

Es ist auch möglich, das erfindungsgemäße Verfahren der Aufarbeitung von Rückständen einer Chlorsilandestillation kontinuierlich durchzuführen.

Beispiel 1

Bei der Hydrochlorierung von Silicium (Si 98,5 Gew.-%, Fe 0,35 Gew.-%, Al 0,55 Gew.-%, Ca 0,15 Gew.-%, P 0,01 Gew.-% S 0,01 Gew.-%) wird nach der Destillation der Chlorsilane ein Rückstand erhalten mit einer Zusammensetzung in Gew.-%: Trichlorsilan 1, Siliciumtetrachlorid 23, Pentachlordisiloxan 8, Hexachlordisiloxan 32, Titantetrachlorid 2, Eisenchlorid 2, Aluminiumchlorid 32.

In einem Rührbehälter von 800 l Inhalt mit aufgesetztem Sprühturm und externem Wärmetauscher werden vorgelegt: 380 l rezirkuliertes klares Filtrat aus der späteren Filtration, 48 l abdestilliertes Wasser aus der späteren Trocknung, 42 l Frischwasser und 47,2 kg kommerziell erhältliches $Ca(OH)_2$. In diese Mischung werden 40 kg Destillationsrückstand eingeleitet, wobei der Behälterinhalt mit einer Pumpe über den Wärmetauscher und den Sprühturm umgewälzt wird. Der Überschuß an $Ca(OH)_2$ zur Bildung von $CaCl_2$ beträgt 47 %. Nach Zugabe des gesamten Destillationsrückstands ist die Reaktion beendet, da die Umsetzung spontan, d. h. mit sehr hoher Geschwindigkeit, vollständig abläuft.

Die Reaktionsmischung wird einem Vakuumtrommelfilter zugeführt, wo bei der Filtration 380 l klares Filtrat und 177 kg feuchter Filterkuchen anfallen. Das Filtrat wird für erneuten Einsatz im Reaktionsbehälter verwendet, der kontinuierlich anfallende feuchte Filterkuchen wird einem kontinuierlichen Schneckentrockner zugeführt, auf dem bei einer Trocknungstemperatur von 180 °C 48 l Wasser als Destillat anfallen und 129 kg trockener deponierbarer Feststoff von heller Farbe und von nicht staubender, krümeliger Konsistenz.

Der so gewonnene Feststoff wird einem standardisierten Extraktionsverfahren nach Methode 1310 der U.S. Environmental Protection Agency unterworfen. Im Extrakt werden gefunden:

    As weniger als 0,09 mg/l
    Ba weniger als 1,8 mg/l
    Cd weniger als 0,4 mg/l
    Cr weniger als 1 mg/l
    Pb weniger als 0,9 mg/l
    Hg weniger als 0,02 mg/l
    Se weniger als 0,9 mg/l
    Ag weniger als 0,9 mg/l
    Zn weniger als 0,2 mg/l.

Diese Werte liegen weit unter den von der U.S. Environmental Protection Agency aufgestellten Grenzwerten.

Beispiel 2

Bei der Hydrochlorierung von Silicium derselben Zusammensetzung wie in Beispiel 1 wird nach der Destillation der Chlorsilane ein Rückstand erhalten, der ebenfalls die Zusammensetzung gemäß Beispiel 1 aufweist.

In einem Rührbehälter von 800 l Inhalt mit aufgesetztem Sprühturm und externem Wärmetauscher werden vorgelegt: 402 l rezirkuliertes klares Filtrat aus der späteren Filtration, 107 l abdestilliertes Wasser aus der späteren Trocknung, 33 l Frischwasser und 63,8 kg kommerziell erhältliches $CaCO_3$. In diese Mischung werden 40 kg Destillationsrückstand eingeleitet, wobei der Behälterinhalt mit einer Pumpe über den Wärmetauscher und den Sprühturm umgewälzt wird. Der Überschuß an $CaCO_3$ zur Bildung von $CaCl_2$ beträgt 47 %. Nach Zugabe des gesamten Destillationsrückstandes ist die Reaktion beendet, da die Umsetzung spontan, d. h. mit sehr hoher Geschwindigkeit, vollständig abläuft. Der pH-Wert der Reaktionsmischung ist nach beendeter Reaktion niedriger als 6.

Die Reaktionsmischung wird einem Vakuumtrommelfilter zugeführt, wo bei der Filtration 402 l klares Filtrat und 223 kg feuchter Filterkuchen anfallen. Das Filtrat wird für erneuten Einsatz im Reaktionsbehälter verwendet, der kontinuierlich anfallende feuchte Filterkuchen wird einem kontinuierlichen Schneckentrockner zugeführt, auf dem bei einer Trocknungstemperatur von 180 °C 107 l Wasser als Destillat anfallen und 116 kg trockener deponierbarer Feststoff von heller Farbe und von nicht staubender, krümeliger Konsistenz. Das Destillat wird in den Prozeß zurückgeführt.

Der so gewonnene Feststoff wird einem standardisierten Extraktionsverfahren nach Methode 1310 der U.S. Environmental Protection Agency unterworfen. Im Extrakt werden gefunden:

    As weniger als 0,2 mg/l
    Ba weniger als 3,9 mg/l
    Cd weniger als 0,9 mg/l
    Cr weniger als 1,8 mg/l
    Pb weniger als 1,9 mg/l
    Hg weniger als 0,02 mg/l

Se weniger als 1 mg/l
Ag weniger als 1,5 mg/l
Zn weniger als 0,2 mg/l.
Diese Werte liegen ebenfalls weit unter den von der U.S. Environmental Protection Agency aufgestellten Grenzwerten.

## Patentansprüche

1. Verfahren zur abwasserfreien Aufarbeitung von Rückständen einer Chlorsilandestillation durch Reaktion in wäßriger Phase mit Calcium-Basen oder Calciumcarbonat, dadurch gekennzeichnet, daß man

    a) bei der Reaktion einen Überschuß an Calcium-Basen oder Calciumcarbonat von mindestens 15 %, bezogen auf die zur Überführung der eingebrachten Chloridanteile in Calciumchlorid erforderliche stöchiometrische Mindestmenge, einsetzt,

    b) den durch Reaktion entstandenen Feststoff aus der Reaktionsmischung abtrennt und die restliche Reaktionsmischung in den Prozeß zurückführt.

2. Verfahren nach Anspruch 1, dadurch gekennzeichnet, daß man den abgetrennten feuchten Feststoff ganz oder teilweise trocknet und die durch Trocknen entfernte Feuchtigkeit in den Prozeß zurückführt.

3. Verfahren nach Anspruch 1 oder 2, dadurch gekennzeichnet, daß der Überschuß an Calcium-Basen oder Calciumcarbonat 20 bis 100 % beträgt.

## Claims

1. Process for the waste water-free processing of residues from a chlorosilane distillation by aqueous phase reaction with calcium bases or calcium carbonate, **characterised in that** (a) there is employed in the reaction an excess of calcium bases or calcium carbonate of at least 15% related to the stoichiometric minimum amount necessary for conversion of the amounts of chloride produced into calcium chloride,

    b) solid being produced by the reaction is separated off from the reaction mixture and the residual reaction mixture is recycled into the process.

2. Process according to claim 1, **characterised in that** the separated off moist solid is dried completely or partially and the moisture removed by drying is recycled into the process.

3. Process according to claim 1 or 2, **characterised in that** the excess of calcium bases or calcium carbonate amounts to 20 to 100%.

## Revendications

1. Procédé de traitement valorisant, sans eaux résiduaires, de résidus d'une distillation de chlorosilanes, par réaction en phase aqueuse avec des bases calciques ou avec du carbonate de calcium , procédé caractérisé en ce que:

    (a) on utilise dans la réaction un excès de bases calciques ou de carbonate de calcium d'au moins 15 %, par rapport à la quantité stoéchiométrique minimale nécessaire pour transformer les chlorures introduits en chlorure de calcium,

    (b) on sépare du mélange réactionnel le solide résultant de la réaction et l'on recycle dans le procédé le reste du mélange réactionnel.

2. Procédé selon la revendication 1, caractérisé en ce que l'on sèche entièrement ou partiellement le solide humide ainsi séparé et l'on recycle dans le procédé l'humidité enlevée par ce séchage.

3. Procédé selon la revendication 1 ou 2, caractérisé en ce que l'excès des bases calciques ou du carbonate de calcium est de 20 à 100 %.